# EUROPEAN PATENT SPECIFICATION

(11) **EP 0 751 191 B1**
(45) Date of publication and mention of the grant of the patent: **25.07.2001**
(21) Application number: 96304411.0
(22) Date of filing: 13.06.1996
(51) Int. Cl.: C09D 5/02, C09D 7/12, C09D 5/00

(54) **Prevention of yellowing in waterborne road marking paints**
Vergilbungsinhibierungsverhinderung in wässrigen Strassenmarkieranstrichen
Prévention du jaunissement dans les peintures aqueuses pour le marquage des routes

(30) Priority: 26.06.1995 FR 9507663
(43) Date of publication of application: 02.01.1997
(73) Proprietor: ROHM AND HAAS COMPANY, Philadelphia, Pennsylvania 19106-2399 (US)
(72) Inventor: Jilek, Josef, 1170 Vienna (AT); Sanfilippo, Angelo, 06560 Valbonne (FR); Schall, Donald Craig, Lansdale, Pennsylvania (US); Trapani, Andrew Paul, 06560 Valbonne (FR)
(74) Representative: Buckley, Guy Julian

(56) References cited:
- EP-A- 0 482 961
- DE-A- 1 946 477
- FR-A- 1 428 223

## Description

This invention is concerned with water-borne road marking paints (hereinafter referred to as "traffic paints"), and in particular the problem of yellowing which sometimes occurs shortly after application of the paint on the road.

Much research has been devoted to ensuring that white water-borne traffic paints remain white and clean for as long as possible after application. However an occasional problem which occurs is that on certain occasions newly applied paints can turn a dirty yellow colour in parts, and sometimes along long stretches. Although visibility of the paint is normally not seriously affected, the yellowing is undesirable for aesthetic reasons, and particularly because users of the paint may believe that a paint which turns yellow within days of application is of poor quality.

Until now there has been no explanation for this phenomenon, which is noted for the apparent randomness of its appearance, and the fact that it occurs soon after application or not at all: an identical paint applied on the same stretch of road on two occasions may turn yellow one time, and not the next. As a result of this lack of understanding of the problem, a solution has so far not been found.

We have now established a possible cause for this phenomenon, and as a result have been able to develop a solution. We believe that the yellowing is caused by iron reacting with materials in the paint formulation to produce what is essentially rust inside the paint, thereby causing yellowing. There is no obvious source of iron in the vicinity of an applied traffic paint: we believe that it may come from vehicles or even from some components of the asphalt on which the paint has been applied. The iron may be able to penetrate the paint if there is rain in the first 24-48 hours after application, when the paint is not fully dry and is hence still susceptible to water penetration. Having been introduced into the paint in this way, it then reacts with certain components of the paint to form yellow or brown "rust", which stains the paint. However if the rain is particularly heavy, the iron and "rust" may be washed out, thereby removing the yellow colour. This would explain the apparent randomness of the phenomenon.

EP-A-343831 discloses a top coat paint for protecting a surface from external rust staining (ie rust from an external source that drips or falls onto the surface). The paint contains a substance capable of reacting with rust capable of chelating iron ions to form a colourless complex. GB 2172599A discloses a similar paint, which contains as chelating agent a polyphosphonate salt pigment. Neither of these references, nor any of the other prior disclosures of such anti-rust staining paints, mention such a problem with traffic paints. Indeed, there is nothing in the prior art to explain the above yellowing problem, or to suggest that it is in any way connected with rust staining.

The present invention provides the use in a water-borne road marking paint, of a chelating agent capable of chelating iron ions to form a substantially colourless complex to reduce or prevent yellowing of said point when newly applied to a road surface. A further aspect of the invention is a method of reducing or preventing yellowing in newly-applied road-marking on a road surface of a water-borne road marking paint, wherein a substance capable of chelating iron ions to form a substantially colourless complex is incorporated in said water-borne road-marking paint.

The use of a chelating agent prevents the iron from reacting to form the "rust" compounds that cause the yellowing effect, and thus ensures that the paint remains white whatever the conditions. Tests which we have conducted using a solution of ferrous sulphate to mimic the effect of the iron confirm the efficacy of this approach.

The chelating agent is preferably a phosphonate or phosphonic acid (a compound bearing one or more PO(OH)₂ groups), EDTA, or a polymeric carboxylic acid. Particularly preferred is amino-tris-methylene phosphonic acid, sold under the name DEQUEST 2000 by Monsanto. This compound has the additional advantage that it functions as a dispersant in the paint, thereby increasing the paint's stability (and enabling less conventional dispersant to be used).

### EXAMPLES

Water-borne traffic paints were prepared and tested by dropping a solution of FeSO₄ onto them within an hour of application. The paints were then examined after drying for yellowing.

The paints used had the following formulation:

| Component | Weight (g) | Purpose | Source |
|---|---|---|---|
| PRIMAL E-2706 (50%) | 487.0 | Binder | Rohm and Haas |
| OROTAN 901 (30%) | 8.4 | Pigment dispersant | Rohm and Haas |
| DREW TG-4250 | 4.0 | Non-silicone defoamer | Drew |
| WATER | 69.0 | | |
| TITAN TR 92 | 265.0 | Titanium dioxide pigment | Tioxide |
| DURCAL 5 | 394.0 | Ca carbonate 5 microns | Omya |
| DURCAL 10 | 394.0 | Ca carbonate 10 microns | Omya |

The above components were mixed for 20 minutes until smooth, and then the following were added:

| | | | |
|---|---|---|---|
| ETHANOL | 26.0 | Freeze-thaw stabiliser | |
| TEXANOL | 23.0 | Coalescent | Eastman |
| WATER | 10.0 | | |
| AMMONIA | 0.2 | To pH 9.5 | |
| DREW TG 4250 | 1.0 | Non-silicone defoamer | Drew |
| WATER | 25.0 | | |
| TOTAL | 1718g | | |
| | 1000ml | | |

This was equilibrated for 1 day, and a viscosity of 85 KU (Stormer)/35 seconds on Ford Cup No.6 was measured.

To some of the paints was added DEQUEST 2000, in certain cases in place of the OROTAN 901. The DEQUEST 2000 was formulated by mixing 45 parts water with 15 parts of a 28% ammonia solution, and then adding 40 parts DEQUEST 2000 (at 50%), to give a pH of 9.5. The ammonia was not added last as this fails to give adequate neutralisation.

Paints thus formulated were applied to a glass surface, and left for one hour. At this point 10 drops of FeSO₄ solution (3g FeSO₄.7H₂O, 1997g water, 6 drops 25% sulphuric acid) were applied to the paint surface. The paint was later observed visually for yellowing. The results were as follows:

| TEST | DEQUEST 2000 | OROTAN 901 | YELLOWING - 2 hrs | 16hrs |
|---|---|---|---|---|
| #1 | No | Yes | Yellow | Yellow |
| | Yes | Yes | White | White |
| #2 | No | Yes | Yellow | Yellow |
| | Yes | No | Off-white | Off-white |

## Claims

1. Use in a water-borne road-marking paint of a chelating agent capable of chelating iron ions to form a substantially colourless complex to reduce or prevent yellowing of said paint when newly applied on a road surface.

2. The use, according to claim 1, wherein the said chelating agent capable of chelating iron ions comprises a phosphonate or phosphonic acid (a compound bearing one or more PO(OH)₂ groups), EDTA, or a polymeric carboxylic acid.

3. The use according to claim 2, wherein the chelating agent capable of chelating iron ions is amino-tris-methylene phosponic acid.

4. A method of reducing or preventing yellowing of a newly-applied road marking on a road surface of a water-borne road-marking paint, said method comprises incorporating in said water-borne road-marking paint a chelating agent capable of chelating iron ions to form a substantially colourless complex.

## Patentansprüche

1. Verwendung eines Chelatbildners in einem wäßrigen Straßenmarkieranstrich, wobei der Chelatbildner in der Lage ist, Eisenionen zu chelatsisieren, so daß ein im wesentlichen farbloser Komplex gebildet wird, um das Vergilben des Anstriches zu verringern oder zu verhindern, wenn dieser auf eine Straßenoberfläche neu aufgebracht wird.

2. Die Verwendung gemäß Anspruch 1, wobei der Chelatbildner, der in der Lage ist, Eisenionen zu chelatisieren, ein Phosphonat oder eine Phosphonsäure (eine Verbindung, die eine oder mehrere PO(OH)₂-Gruppen trägt), EDTA oder eine polymere Carbonsäure umfaßt.

3. Die Verwendung nach Anspruch 2, wobei der Chelatbildner, der in der Lage ist, Eisenionen zu chelatisieren, Amino-tris-methylen-phosphonsäure ist.

4. Ein Verfahren zur Verringerung oder Verhinderung des Vergilbens einer neu aufgebrachten Straßenmarkierung auf eine Straßenoberfläche eines wäßrigen Straßenmarkieranstriches, wobei das Verfahren das Inkorporieren eines Chelatbildners in den wäßrigen Straßenmarkieranstrich umfaßt und der Chelatbildner in der Lage ist, Eisenionen zu chelatisieren, so daß ein im wesentlicher farbloser Komplex gebildet wird.

## Revendications

1. Utilisation, dans une peinture aqueuse pour le marquage des routes, d'un agent chélatant capable de chélater les ions fer pour former un complexe sensiblement incolore afin de réduire ou de prévenir le jaunissement de ladite peinture lorsqu'elle est nouvellement appliquée sur un revêtement routier.

2. Utilisation selon la revendication 1, dans laquelle ledit agent chélatant capable de chélater les ions fer comprend un phosphonate ou un acide phosphonique (un composé portant un ou plusieurs groupes PO(OH)₂), l'EDTA, ou un acide carboxylique polymérique.

3. Utilisation selon la revendication 2, dans laquelle l'agent chélatant capable de chélater les ions fer est l'acide amino-tris-méthylènephosphonique.

4. Procédé pour réduire ou prévenir le jaunissement d'un marquage routier nouvellement appliqué sur un revêtement routier d'une peinture aqueuse pour le marquage des routes, lequel procédé comprend l'incorporation dans ladite peinture aqueuse pour le marquage des routes d'un agent chélatant capable de chélater les ions fer en formant un complexe sensiblement incolore.
